# EUROPÄISCHE PATENTSCHRIFT

(11) **EP 2 741 899 B1**
(45) Veröffentlichungstag und Bekanntmachung des Hinweises auf die Patenterteilung: **15.10.2014**
(21) Anmeldenummer: 12799288.1
(22) Anmeldetag: 25.10.2012
(51) Int. Cl.: B29C 44/56, C08J 9/36, E04B 1/76, E04B 1/80, E04C 2/20, F16L 59/00

(54) **KUNSTSTOFFSCHAUMPLATTE UND VERFAHREN ZU SEINER HERSTELLUNG**
PLASTIC FOAM BOARD AND METHOD FOR THE PRODUCTION THEREOF
PLAQUE DE MOUSSE SYNTHÉTIQUE ET PROCÉDÉ POUR LA FABRIQUER

(43) Veröffentlichungstag der Anmeldung: 18.06.2014
(73) Patentinhaber: Mostafa, Kamal, Gizeh (EG)
(72) Erfinder: Mostafa, Kamal, Gizeh (EG)
(74) Vertreter: Hansen, Jochen
(86) Internationale Anmeldenummer: PCT/IB2012/055873
(87) Internationale Veröffentlichungsnummer: WO 2014/064487

(56) Entgegenhaltungen:
- EP-A1- 0 792 732
- US-A- 3 443 007
- US-A1- 2008 003 421
- US-A1- 2011 258 944

## Beschreibung

Die Erfindung betrifft ein Verfahren zur Verbesserung der Wärmedämmeigenschaften von geschlossenzelligen Kunststoffschaumplatten, die eine vorderseitige Oberfläche und eine der vorderseitigen Oberfläche gegenüberliegende rückseitige Oberfläche und eine durch die vorder- und rückseitige Oberflächen begrenzte erste Stärke aufweisen. Ferner betrifft die Erfindung eine Kunststoffschaumplatte aus einem geschlossenzelligen Kunststoffschaum mit einer vorderseitigen Oberfläche und einer der vorderseitigen Oberfläche gegenüberliegenden rückseitigen Oberfläche und einer durch die vorder- und rückseitige Oberfläche begrenzten, ersten Stärke.

Geschlossenzelliger Kunststoffschaum besteht aus Hohlzellen, die durch kontinuierliche dünne Kunststoffmembrane voneinander getrennt sind. Man spricht normalerweise von geschlossenzelligem Schaum, wenn das Verhältnis zwischen der Zahl der geschlossenen Zellen im Schaum im Vergleich zur Gesamtzellenzahl bevorzugt 95 % oder mehr beträgt. Beispielsweise sind aus der US 2011/258944 A1 extrudierte, geschlossenzeilige Polystyrol-Wärmdämmplatten (XPS) bekannt. Die in dieser Form bekannten Bau-Polystyrolschaumplatten weisen im Allgemeinen gute thermische Dämmeigenschaften bzw. niedrige Wärmeleitfähigkeiten λ von ca. 0,03 - 0,04 W/mK auf.

Um den steigenden Anforderungen der Energieeinsparung gerecht zu werden, werden die aus bautechnischen Gründen gewählten Dämmstoffe immer dicker, wodurch wertvoller Innenraum verloren geht. Daher und aus anderen Gründen sind Verringerungen der Wärmeleitfähigkeit von Dämmstoffen stets gefragt. Es besteht vor diesem Hintergrund zunächst die Aufgabe nach verbesserten Wärmedämmstoffen für die Bauindustrie und/oder nach Verfahren, bekannte Wärmedämmstoffe hinsichtlich ihres Wärmeisolationsverhaltens zu verbessern. Gleichzeitig besteht ein grundsätzliches Interesse daran, auch andere Eigenschaften der bekannten Kunststoffschaumplatten, wie beispielsweise deren Wasseraufnahme, Schalldämmung und mechanische Eigenschaften, zu optimieren, wobei diese Aspekte weniger im Vordergrund der vorliegenden Erfindung stehen.

Einige frühere Entwicklungen in dieser Richtung sind beispielsweise aus den Schriften der US 2011-0 064 938 A1, EP 0 863 175 A2, EP 0 372 343 B1 und EP 1 486 530 A1 bekannt, innerhalb derer man beispielsweise Ruß oder Graphit als Additive von Kunststoffschaumplatten vorschlägt, womit eine Reduzierung der Wärmeleitfähigkeit von Polystyrolschaumplatten erreicht werden konnte. Als nachteilig ist jedoch gleichzeitig festzuhalten, dass diese Produkte eine sehr dunkle Farbe aufweisen, was auf Baustellen immer wieder zu Verwölbungsproblemen aufgrund ihrer zu starken Aufheizung führt. Ein weiterer Nachteil von Kunststoffschaumplatten mit Ruß- oder Graphitbestandteilen ist deren relativ höherer Preis.

Bekannt sind auch die sog. Vakuumisolationspaneele (VIP), die aus einem stark evakuierten Kern und einer gasdiffusionsdichten Folienummantelung bestehen. Der Kern besteht in der Regel aus einem porösen Material oder aus offenzelligen Kunststoffschäumen. Diese Paneelen weisen zwar einen sehr niedrigen λ-Wert von ca. 0,006 - 0,0012 W/mK auf, sind allerdings sehr produktionsaufwendig und deshalb wesentlich teurer. Ein weiterer Nachteil ist der rasche Verlust ihrer ausgezeichneten Wärmeisolierungseigenschaften im Fall einer mechanischen Beschädigung der Paneelummantelung, die unkorrigierbar ist.

Eine weitere Lösung bietet JP 2002-14497A, bei der eine Schaumstoffplatte möglichst früh nach der Produktion mit einem gasundurchlässigen Material beschichtet wird, wodurch der Austausch zwischen den im Schaum befindlichen Produktionsgasen (die einen geringeren λ-Wert als Luft aufweisen) und der Umgebungsluft behindert wird. Diese Methode hat allerdings den Nachteil, dass der grösste Teil der Produktionsgase und die dabei meist angewandten entflammbaren Komponenten im Schaum bleiben. Ebenfalls zum Zweck der Verlängerung der Alterungszeit schlägt US 2010-0304075A1 die Beschichtung von frisch produziertem Polystyrolpartikelschaum (EPS) mit einer gasdiffusionsdichten Beschichtung vor.

US 4,299,883 A schlägt die Verbesserung der Schallabsorption von Polycarbodiimid-Schäumen durch Pressung und Brechen von Schaumzellenwänden vor. Es wird keine Verbesserung der Wärmedämmung durch dieses Verfahren erzielt.

EP 0 792 732 A1 schlägt die Elastifizierung von offenzelligen Polyurethanhartschaumplatten durch Pressung und Zerbrechung ihrer offenen Zellwände vor. Diese Methode vereinfacht zwar die Installation, verbessert jedoch nicht die Wärmedämmung.

US 5,520,873 A beschreibt ein Pressverfahren zur Verbesserung der dynamischen Rigidität von Schaumplatten durch 5 bis 10-fache Pressung und die Entlastung der Schaumplatte. Die Wirkung dieser Methode wird lediglich bei Polystyrolpartikelschaum (EPS) bewiesen.

EP 0 056 121 B1 schlägt die Stauchung von Schaumstoffplatten aus Polystyrolpartikelschaum auf eine Weise vor, bei der die gestauchten Zellen ein Verhältnis zwischen langer und kurzer Achse in einem Bereich zwischen 1,3 bis 1,6 aufweisen. Den weiteren Ausführungen der Schrift ist zu entnehmen, dass zur Erreichung des Zellachsenverhältnisses eine Stauchung zwischen zwei planparallelen Platten über eine Zeitspanne von 30 - 90 Sekunden erforderlich ist. Als offensichtliche Nachteile eines derartigen Verfahrens sind die sich ergebende höhere Dichte und der größere Kostenaufwand zu nennen. Gleichzeitig besteht die Gefahr des Brechens der Zellstruktur.

Als andere Methode zur Erhöhung der Flexibilität von geschlossenzelligen quervernetzten Polyolefinschaumplatten schlägt die US 2008-003421 A1 die Pressung der Platte zwischen ein oder zwei Rollensets vor, wobei die Geschwindigkeiten der gegenüber liegenden Rollen unterschiedlich sind. Dabei entstehen zusätzliche Schubspannungen, die dem Ziel dienen, höhere Anteile der geschlossenen Zellen zu zerbrechen bzw. zu öffnen. Eine Verbesserung der Wärmedämmung wird nicht erwähnt und wohl auch nicht erwartet.

US 2011-0229693 A1 beschreibt eine Methode zur Herstellung von Schaumstoffplatten mit strukturierten Oberflächen, bei der die Schaumplatten durch ein Rollensystem mit entsprechend strukturierten Rollenoberflächen eingedrückt werden. Eine Verbesserung der Wärmedämmeigenschaften bezweckt diese Methode nicht.

US 3,443,007 A beschreibt eine Methode zur Versiegelung von Polyurethanschaumoberflächen, bei der die Oberfläche unter höherer Temperatur eingedrückt wird. Dabei schmilzt die Oberfläche und es bildet sich eine dichte Polyurethanhaut. Bei dieser Methode werden z.B. beheizte Rollen angewendet. Das Ziel dieser Methode besteht nicht in der Verbesserung der wärmedämmenden, sondern lediglich einiger mechanischen Eigenschaften der Polyurethanschaumelemente.

Ein Pressverfahren von Kunststoffschaumplatten bei einer Temperatur zwischen 50°C und 95°C hat der Erfinder bereits in einer früheren deutschen Patentanmeldung mit dem Aktenzeichen 10 2011 119 607.6 beschrieben. Dabei erreicht man eine Verbesserung der Wärmedämmung der Platte jedoch lediglich durch die Modifizierung der Zellmorphologie.

Das Ziel der Erfindung besteht also darin, eine möglichst einfache und ökonomische Lösung zu finden, um die Wärmeleitfähigkeit traditioneller geschlossenzelliger Kunststoffschaumplatten zu vermindern und demzufolge höhere Energieeinsparungen bei geringerer Dicke zu erreichen.

Das erfindungsgemäße Verfahren sieht ein Ausrollpressen einer geschlossenzelligen Kunststoffschaumplatte im temperierten Zustand in ihrer Dickenrichtung vor, die unmittelbar anschließend mit einem luftdiffusionsdichten Material beschichtet wird. Die Platte weist vor ihrem Ausrollen und/oder während des Ausrollpressvorgangs eine Temperatur zwischen 30°C und 95°C auf. Diese erhöhten Temperaturen während des Pressens beschleunigen die Gasdiffusion durch die Zellwände, wobei das Aufbrechen der geschlossenen Zellen vermieden wird. Untersuchungen nach ASTM D 6226-10 haben bewiesen, dass sich der Anteil der offenen Zellen durch die Pressung einer extrudierten Polystyrolhartschaumplatte im erfindungsgemäß temperierten Zustand kaum erhöht.

Der Pressspalt zwischen den Rollen in Pressrichtung beträgt 1/2 bis 1/20 der ersten Stärke der vorher herkömmlich produzierten Kunststoffschaumplatten, so dass die in den Zellen eingeschlossenen Produktionsgase wirksam hinausgepresst und möglichst keine geschlossenen Zellen in offene Zellen aufgebrochen werden.

Im Hinblick auf dieses Ziel wird auch die Anzahl der Pressrollenpaare bestimmt. Ihre Anzahl richtet sich hauptsächlich nach der Plattendicke am Anfang des Pressvorgangs, den Temperaturen der Platte während des Pressens und den verwendeten Treibmitteln. Die Zahl der Pressrollenpaare kann zwischen einem Paar und zehn Paaren oder mehr liegen.

Am Ende des Ausrollpressvorgangs erhöht sich die Plattendicke (reversible Stauchung) wieder auf eine zweite Stärke, die noch gegenüber der ersten Stärke reduziert ist, wobei in den geschlossenen Zellen, aus denen die Produktionsgase herausgepresst wurden, ein partielles Vakuum entsteht. Die Platten werden möglichst schnell zu den gewünschten Größen konfektioniert und mit einem geeigneten luftdiffusionsdichten Material beschichtet, damit der Druck in den Zellen weiterhin niedrig bleibt.

Zur Vermeidung der Erhöhung der Dichte der Platte durch die Pressung werden die Drehgeschwindigkeiten der Rollenpaare entlang des Pressrollenzuges stufenweise erhöht, was ein allmähliches Ausziehen der Platte in Längsrichtung (entlang des Presszuges) bewirkt.

Entsprechend den Erkenntnissen des Erfinders wird während des Pressvorganges der größte Teil des in den Zellen eingeschlossenen Gases, bevorzugt fast das gesamte Gas, aus der Platte herausgepresst. Erst beim Vorgang der erneuten Ausdehnung der Platte, beginnend bei der Stärke am Ende des Presszuges (Pressspalt) bis zur zweiten Stärke nach Beendigung der reversiblen Stauchung, wird sich in den geschlossenen Zellen zunächst ein Vakuum bilden. Die Platte wird unmittelbar nach dem Ausrollvorgang mit einem geeigneten luftdiffusionsdichten Material beschichtet, womit das Vakuum in den geschlossenen Zellen geschützt wird, wodurch eine signifikante langfristige Verbesserung der Wärmedämmung der Platte erreicht wird.

Erfindungsgemäß liegt der Wert des Vakuums in den geschlossenen Zellen der Platte bevorzugt unter 500 Millibar, und weiter bevorzugt unter 100 Millibar. Es ist auch erwähnenswert, und wohl bereits bekannt, dass die durch die Pressung verursachte kleinere Zellengröße in Richtung der Plattendicke zu einer zusätzlichen Verringerung der Wärmeleitfähigkeit und damit zur Verbesserung der Wärmedämmung in Richtung der Plattendicke führt.

Dank der Zellen der Platte, die auch nach der Pressung geschlossen bleiben, kann die Umgebungsluft nur langsam in die Platte eindringen, weshalb der niedrige Druck in den geschlossenen Zellen nicht unmittelbar beeinträchtigt wird. Daher verbleibt genügend Zeit zur Auftragung des luftdiffusionsdichten Beschichtungsmaterials.

Ein weiterer Vorteil der geschlossenen Zellen besteht darin, dass mechanische Beschädigungen, wie z.B. Bohren, Schneiden, Nageln, Schrauben oder Stoßen, bei dieser Platte nicht zu einem raschen Vakuumsverlust in den Zellen (wie dies bei den bekannten VIP-Paneelen der Fall ist) führen. Der Einfluss ist lokal begrenzt und beeinträchtigt die Wärmedämmung der Erfindungsplatte erst nach längerer Zeit, sodass genug Zeit verbleibt, um eine derartige Beschädigung mit einem geeigneten Reparaturmaterial korrigieren zu können.

Damit die primäre, Treibmittel enthaltende Gasfüllung in den Zellen des Schaumes während des Pressens rascher heraus diffundieren kann, ist es vorteilhaft und stellt eine bevorzugte Ausführungsform dar, wenn das hier vorgeschlagene Verfahren vor dem Pressen eine Oberflächenbehandlung der zugeführten Kunststoffschaumplatten umfasst. Die Oberflächenbehandlung kann
- ein Abfräsen der obersten Außenfläche auf Seiten der vorderseitigen Oberfläche und/oder der rückseitigen Oberfläche,
- ein Abschleifen der obersten Außenfläche auf Seiten der vorderseitigen Oberfläche und/oder der rückseitigen Oberfläche,
- ein Absägen der obersten Außenfläche auf Seiten der vorderseitigen Oberfläche und/oder der rückseitigen Oberfläche und/oder
- ein Perforieren mit einem Nadelroller auf Seiten der vorderseitigen Oberfläche und/oder der rückseitigen Oberfläche
sein.

Die Bestimmung der Anfangsdicke (erste Stärke) der Kunststoffschaumplatte erfolgt dann nach dieser Oberflächenbehandlung.

Erfindungsgemäß weisen die Platten während des Pressens eine Temperatur in einem Bereich zwischen 30°C und 95°C, bevorzugt zwischen 50°C und 75°C und besonders bevorzugt zwischen 65°C und 75°C, auf. Diese Temperaturbereiche beziehen sich auf die Oberflächentemperaturen und auf die Temperatur im Inneren der flächigen Kunststoffschaumplatten. Als eine Möglichkeit gilt es insofern als bevorzugt, wenn das Verfahren ein Aufheizen der Platten vor dem Pressen als auch während der Pressung, beispielsweise durch beheizte Pressrollen, umfasst.

Um eine wesentliche Optimierung innerhalb der Produktion für die Platte zu erreichen, ist es denkbar und gilt als bevorzugt, die Maschine zur kontinuierlichen Produktion von extrudierten Kunststoffschaumplatten in die erfindungsgemäße Produktionslinie für ein Verfahren zur Herstellung der Platten zu integrieren. Dabei nutzt man insbesondere die Energie der unmittelbar nach der Produktion noch warmen Originalplatte zu einer effizienten Pressung, vor allem weil die Temperatur der Platte nicht nur außenseitig, sondern auch in ihrem Inneren noch hoch ist.

Insbesondere mit Blick auf Umweltschutzaspekte und/oder aus ökonomischen Gründen wird der Verfahrensschritt des Pressens innerhalb eines Gehäuses bzw. einer Einhausung zur Sammlung, kontrollierten Abführung und gegebenenfalls im Rahmen einer bevorzugten Ausführung auch zur Wiederverwendung ausgepresster Treibmittel aus den Platten, durchgeführt. Dieses kann auch geschehen, um bestimmte Treibmittel, die ausgezeichnete Schaumeigenschaften ermöglichen und deren Verwendung in den letzten Jahren aus Umweltschutzgründen untersagt wurde, wie beispielsweise CFC-(Chlorfluorkohlenstoff) und HCFC- (hydrogenierter Chlorfluorkohlenstoff) Treibgase, nutzen zu können.

In Reflexion auf den vorherigen Absatz gelten für das hier vorgeschlagene Verfahren alle bekannten Treibmittel für die Kunststoffschaumherstellung als geeignet, insbesondere anorganische Treibmittel, wie beispielsweise: Kohlenstoffdioxide, Nitrogen, Luft, Argon, Helium, Wasser; organische Treibmittel, wie beispielsweise: Methan, Ethanol, Propan, n-Butan, Isobutan, n-Pentan, Neopentan, Cyclobutan, Cyclopentan, Difluorethan (HFC-152 a), Tetrafluorethan (HFC -134), Difluorethan (HCFC 142 b), Chlorodifluoromethan (HCFC 22); und/oder chemische Treibmittel, wie beispielsweise: Azodicarbonamid, P-toluene.

Als besonders bevorzugter Kunststoff zur Ausbildung der Kunststoffschaumplatte bieten sich Polystyrolkunststoffe an. In bevorzugter Ausführungsform wird der Polystyrolkunststoff mit anderen Kunststoffen kombiniert, ausgesucht aus der Liste, umfassend Acrylonitrile, Polymethylacrylate, Kautschuk, Polyethylene und/oder Additive, einzeln oder in Kombination miteinander, ausgewählt aus der Gruppe, umfassend: Ruß, Graphit, Titaniumdioxid, Hexabromocyclododekan, Triphenylphosphat, Talkum, Kalziumkarbonat, Kaolin, Kalziumstearat, Magnesiumoxid, die auch in Mikro- oder Nanoform sein können. Durch diese oder andere Kunststoffe und/oder Additive in Verbindung mit dem vorgeschlagenen Pressverfahren können physikalische und/oder mechanische Eigenschaften der Platte verbessert werden, wozu u.a. die Eigenschaften Wärmedämmung, Wasseraufnahme, Feuerbeständigkeit, dimensionale Stabilität, Druckfestigkeit, Biegefestigkeit, Zugfestigkeit gehören.

Als bevorzugtes gasdiffusionsdichtes Beschichtungsmaterial bieten sich z.B. Epoxide, Polyurethane, Polyvenylalkohol, Polyester, Latex, metallisierte Beschichtungen, Aluminiumfolien und dickere Polstyrolhaut, z.B. durch Plattenoberflächenschmelzen bzw. Bügeln, an. Bei der Wahl der geeigneten Beschichtung sollte man die Wiederverwendungsaspekte berücksichtigen. Diese oder andere Beschichtungen werden beim vorgeschlagenen Verfahren das in den Zellen entstandene Vakuum vor einem Druckanstieg schützen. Gleichzeitig können auch andere physikalische Eigenschaften der Platte, wie z.B. Wasseraufnahme und Schalldämmung als auch mechanische Eigenschaften der Platte, wie z.B. Biege- und Zugfestigkeit, Abrieb- und Kratzwiderstand, verbessert werden.

Um eine Platte einer bestimmten Dicke entsprechend dieser Erfindung zu produzieren, kann man eine einzelne dickere Kunststoffschaumplatte zur gewünschten Dicke pressen. Es ist auch möglich, dünnere Kunststoffschaumplatten zu produzieren und die gewünschte Plattendicke durch Doppelung bzw. allgemein durch Mehrfachstapelung zu erzielen; somit gilt es als bevorzugte Ausführungsform der vorgeschlagenen Platte, diese mit einer zweiten gleich ausgebildeten Platte unlöslich - beispielsweise durch Verklebung - zu verbinden. Man erreicht durch diese Mehrfachstapelung eine noch bedeutend niedrigere Wärmeleitfähigkeit des Stapelverbundes als dieses möglich ist mit einer gleichdicken, jedoch ungestapelt ausgebildeten Kunststoffschaumplatte.

Es gilt als eine weitere bevorzugte Ausführung der vorgeschlagenen Kunststoffschaumplatte, wenn diese flächige Platte mit einer weiteren Platte aus mindestens einem anderen Werkstoff unlöslich verbunden ist.

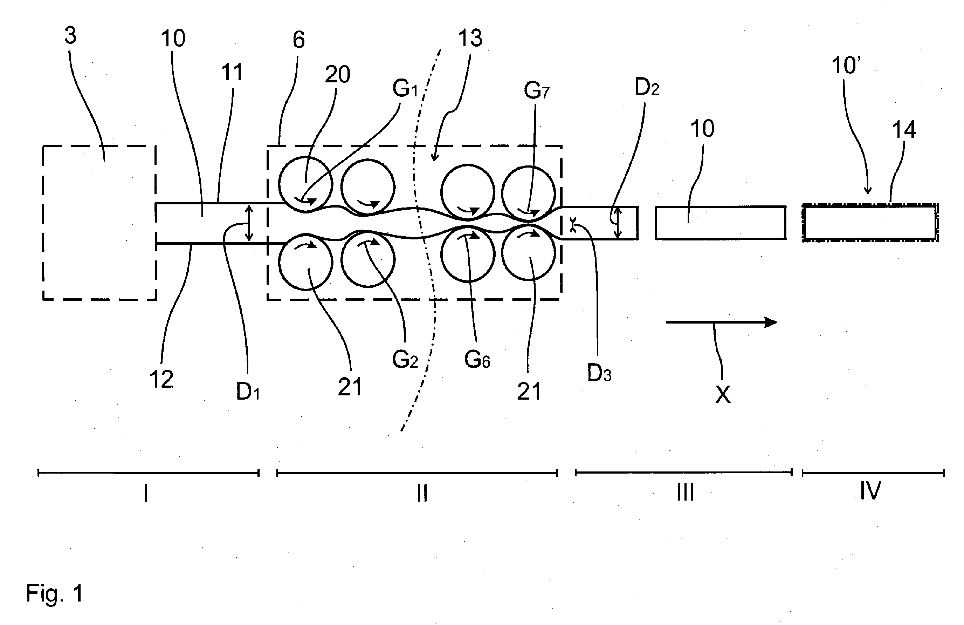

Nachfolgend wird die Erfindung anhand der Zeichnung detailliert beschrieben. Darin zeigt Figur 1 eine beispielhafte integrierte Produktionslinie zur kontinuierlichen Produktion von gepressten und gezogenen extrudierten Kunststoffschaumplatten 10', beginnend mit einer Produktionslinie 3 im Abschnitt I für derartige Kunststoffschaumplatten 10, deren erste Stärke (Produktionsdicke) D₁ im dargestellten Fall ca. 60 mm beträgt.

Abschnitt II demonstriert den Einsatz eines Pressrollenzuges 13. Der Pressrollenzug 13 weist mehrere in Produktionsrichtung hintereinander angeordnete Rollenpaare 21, 22 auf, die einen in Transportrichtung von Pressrollenpaar zu Pressrollenpaar 20, 21 reduzierten Pressspalt D₃ aufweisen, wobei der Pressspalt D₃ am Ende des Pressrollenzuges 13 lediglich 5 bis 8mm beträgt. Im in Figur 1 dargestellten Ausführungsbeispiel sind sieben Rollenpaare 20, 21 vorgesehen, von denen jeweils die ersten und letzten beiden dargestellt sind. In Transportrichtung der Kunststoffschaumplatten 10 erhöht sich die Drehgeschwindigkeit schrittweise von G1 bis G7, wie dies in Figur 1 mit den Bewegungspfeilen G1 bis G7 verdeutlich ist.

Die Pressrollen 20, 21 haben bei diesem Beispiel einen Außendurchmesser von 250 mm und sind im dargestellten Fall nicht beheizt, was jedoch grundsätzlich bevorzugt ist. Die Durchschnittstemperatur der Platte 10 unmittelbar vor der Pressung beträgt ca. 75°C und am Ende der Pressung ca. 60°C. Der gesamte Bereich, in dem die zugeführte Kunststoffschaumplatte 10 durch die Pressrollen 20, 21 gepresst wird, ist mittels einer Einhausung 6 zur Sammlung, kontrollierten Abführung und Wiederverwendung ausgepresster Treibmittel (aus der Platte 10) umschlossen. Am Ende von Abschnitt II folgt die erneute Ausdehnung der Kunststoffschaumplatte 10, beginnend von der dem Pressspalt D₃ entsprechenden Stärke, unmittelbar am Ende des Presszuges 13 bis zu einer Enddicke D₂ (zweite Stärke) von ca. 55 mm gemäß reversibler Stauchung.

Darauf erfolgt in Abschnitt III die Konfektionierung der Platten 10 zu den gewünschten Größen und schließlich im Abschnitt IV die luftdiffusionsdichte allseitige Beschichtung 14, um den Unterdruck in den geschlossenen Zellen vor Verlust zu schützen. Als luftdiffusionsdichtes Material wird in dieser Darstellung lösungsmittelfreies Epoxydharz angewendet. Am Ende liegt eine vollständige umhüllte Kunststoffschaumplatte 10' vor, die einen erheblich besseren λ-Wert hat, als die unbehandelte Platte 10.

Die vorliegende Erfindung soll durch die nachfolgenden Beispiele weitergehend veranschaulicht werden, wobei die Herstellung der hier vorgestellten Kunststoffschaumplatten auf einer Maschine erfolgt, wie sie in der Figur 1 schematisch vorgestellt wird.

Beispiel 1: Eine XPS-Kunststoffschaumplatte 10 mit einer Anfangsdicke (erste Stärke D₁) von 60 mm und einer Dichte von 32,0 kg/m³, die mit dem Treibmittel HFC-152 a hergestellt wurde, wird in einem temperierten Zustand von ca. 75°C bis abnehmend 60°C zu einer Enddicke (zweite Stärke D₂) von ca. 55 mm und einer Dichte von ca. 31,5 kg/m³ gepresst und gezogen. Die daraus resultierende Platte 10 wird nach der Konfektionierung mit einem lösungsmittelfreien Epoxydharz von ca. 100 µm beschichtet. Tabelle 1 umfasst die daraus resultierenden Ergebnisse.

**Tabelle 1**

| | Original XPS Platte (10) | Erfindungsgemäße XPS Platte (10') |
|---|---|---|
| Dicke | ca. 60 mm | ca. 55 mm |
| Dichte | 32,0 kg/m³ | 31,5 kg/m³ |
| geschlossene Zellen | ca. 97% | ca. 97% |
| λ -10°C nach 1 Tag | 0,0282 W/mK | 0,0186 W/mK |
| λ -10°C nach 180 Tage | 0,0315 W/mK | 0,0186 W/mK |

Beispiel 2: Eine Kunststoffschaumplatte 10 mit einer Anfangsdicke (erste Stärke D₁) von 53,0 mm und einer Dichte von 35,5 kg/m³, die mit einer Treibmittelmischung CO₂/DME hergestellt wurde, wird in einem temperierten Zustand von ca. 75°C bis abnehmend 65°C zu einer Enddicke (zweite Stärke D₂) von ca. 50 mm und einer Dichte von 34 kg/m³ gepresst und gezogen. Tabelle 2 umfasst die daraus resultierenden Ergebnisse:

**Tabelle 2**

| | Original XPS Platte 10 | Erfindungsgemäße XPS- Platte 10' |
|---|---|---|
| Dicke | 53,00 mm | ca. 50 mm |
| Dichte | ca. 35,5 kg/m³ | ca. 34,0 kg/m³ |
| geschlossene Zellen | ca. 95% | ca. 95% |
| λ 10°C nach 1 Tag | 0,0318 W/mK | 0,0204 W/mK |
| λ 10°C nach 90 Tagen | 0,0372 W/mK | 0,0204 W/mK |

Die Beispiele beweisen, dass die vorliegende Erfindung eine einfache und ökonomische Methode bietet, die Wärmeleitfähigkeit traditioneller Kunststoffschaumplatten signifikant zu vermindern und demzufolge höhere Energieeinsparungen bei verminderter Plattenstärke zu erreichen. Des Weiteren wird vermutet, dass die Wärmeleitfähigkeit der Erfindungsgemäß hergestellten Kunststoffschaumplatte 10' bedeutend niedriger als die der erwähnten Beispiele ist, wenn die Zellmorphologie der Originalplatte 10 noch geeigneter ist, was z.B. durch die Anwendung der bevorzugten Treibmittel ermöglicht wird.

### Bezugszeichenliste

- 3: Kunststoffschaumplattenproduktionslinie
- 6: Einhausung, Gehäuse
- 10: Kunststoffschaumplatte
- 10': Kunststoffschaumplatte, gepressr und gezogen
- 11: vorderseitige Oberfläche
- 12: rückseitige Oberfläche
- 13: Pressrollenzug
- 14: Beschichtung aus luftdiffusionsdichtem Material
- 20: Rolle
- 21: Rolle
- D₁: erste Stärke, Produktionsdicke
- D₂: zweite Stärke, Enddicke
- D₃: Pressspalt
- G1-G7: Drehgeschwindigkeit
- X: Transportrichtung

## Patentansprüche

1. Verfahren zur Verbesserung der Wärmedämmeigenschaften von geschlossenzelligen Kunststoffschaumplatten (10), die eine vorderseitige Oberfläche (11) und eine der vorderseitigen Oberfläche (11) gegenüberliegende rückseitige Oberfläche (12) und eine durch die vorder- und rückseitige Oberflächen (11, 12) begrenzte erste Stärke (D₁) aufweisen, **gekennzeichnet durch** die Schritte,
a) Erwärmen der Platte (10) auf eine Temperatur von 30°C bis 95°C,
b) Pressen der Platte (10) nach und/oder beim Erwärmen **durch** Hindurchfördern **durch** einen Pressrollenzug (13), wobei ein im Pressrollenzug ausgebildeter Pressspalt (D₃) 1/2 bis 1/20 der ersten Stärke (D₁) beträgt, und
c) luftdiffusionsdichtes Beschichten der Platte (10) unmittelbar nach dem Pressvorgang.

2. Verfahren nach Anspruch 1, wobei der Pressrollenzug (13) mindestens zwei Rollenpaare hat, **dadurch gekennzeichnet, dass** sich die Transportgeschwindigkeiten (Gₙ) der Rollenpaare (20, 21) entlang des Pressrollenzuges (13) in Transportrichtung (X) der Platte (10) schrittweise erhöhen.

3. Verfahren nach Anspruch 1 oder 2, **dadurch gekennzeichnet, dass** vor dem Pressen :
a) ein Abfräsen der obersten Außenfläche auf Seiten der vorderseitigen Oberfläche (11) und/oder der rückseitigen Oberfläche (12);
b) ein Abschleifen der obersten Außenfläche auf Seiten der vorderseitigen Oberfläche (11) und/oder der rückseitigen Oberfläche (12);
c) ein Absägen der obersten Außenfläche auf Seiten der vorderseitigen Oberfläche (11) und/oder der rückseitigen Oberfläche (12) und/oder
d) ein Perforieren mit Nadelrollern auf Seiten der der vorderseitigen Oberfläche (11) und/oder der rückseitigen Oberfläche (12) erfolgt.

4. Verfahren nach einem der vorangehenden Ansprüche, **dadurch gekennzeichnet, dass** die zugeführten Platten (10) vor dem Pressen und/oder während des Pressens auf 65°C bis 75°C erwärmt werden.

5. Verfahren nach einem der vorangehenden Ansprüche, **dadurch gekennzeichnet, dass** die beim Pressen ausgepressten Treibmittel aus den Platten (10) aufgefangen und wiederverwendet werden.

6. Verfahren nach einem der vorangehenden Ansprüche, **dadurch gekennzeichnet, dass** es unmittelbar nach einer Produktionslinie (3) zur Herstellung von Kunststoffschaumplatten (10) als kontinuierliche Produktionslinie zur Herstellung der Platte (10') ausgeführt wird.

7. Kunststoffschaumplatte (10') insbesondere hergestellt nach einem Verfahren gemäß einem der vorangehenden Ansprüche, aus einem geschlossenzelligen Kunststoffschaum mit einer vorderseitigen Oberfläche (11) und einer der vorderseitigen Oberfläche (11) gegenüberliegenden rückseitigen Oberfläche (12) und einer durch die vorder- und rückseitige Oberfläche (11, 12) begrenzten, ersten Stärke (D₁), **dadurch gekennzeichnet, dass** der Kunststoffschaum nach der Herstellung gepresst und gezogen ist und wenigstens die vorderseitige und die rückseitige Oberflächen (11, 12) eine Beschichtung aus luftdiffusionsdichtem Material (14) aufweisen.

8. Kunststoffschaumplatte (10) nach Anspruch 7, **dadurch gekennzeichnet, dass** der Kunststoff zur Ausbildung der Kunststoffschaumplatte (10) Polystyrolkunststoff ist, der mit anderen Kunststoffen kombiniert werden kann, ausgesucht aus der Liste, umfassend Acrylonitrile, Polymethylacrylate, Kautschuk, Polyethylene und/oder Additive, einzeln oder in Kombination miteinander, ausgewählt aus der Gruppe, umfassend: Ruß, Graphit, Titaniumdioxid, Hexabromcyclododekan, Triphenylphosphat, Talkum, Kalziumkarbonat, Kaolin, Kalziumstearat, Magnesiumoxid, die auch in Mikro- oder Nanoform vorliegen können.

9. Kunststoffschaumplatte (10') nach den Ansprüchen 7 oder 8, **dadurch gekennzeichnet, dass** das lufdiffusionsdichte Beschichtungsmaterial (14), ausgesucht aus der Liste, umfassend Epoxide, Polyurethane, Polyvenylalkohol, Polyester, Latex, metallisierte Beschichtungen, Aluminiumfolien, dickere Polstyrolhaut, ist.

10. Kunststoffschaumplatte (10') nach den Ansprüchen 7 oder 8, **dadurch gekennzeichnet, dass** sich als Treibmittel für die Herstellung der Originalschaumplatte (10) anbietet, ausgesucht aus der Liste, umfassend anorganische Treibmittel, insbesondere Kohlenstoffdioxide, Nitrogen, organische Treibmittel, insbesondere n-Butan, Isobutan, Difluorethan, chemische Treibmittel, insbesondere P-Toluene.

11. Geschlossenzellige Kunststoffschaumplatte (10') nach einem der Ansprüche 7 bis 10, **dadurch gekennzeichnet, dass** der Druck in den Zellen kleiner gleich 500 Millibar beträgt.

12. Geschlossenzellige Kunststoffschaumplatte (10') nach einem der Ansprüche 7 bis 11, **dadurch gekennzeichnet, dass** die Platte (10') mit einer weiteren Platte (10') unlöslich verbunden ist.

13. Geschlossenzellige Kunststoffschaumplatte (10') nach Anspruch 12, **dadurch gekennzeichnet, dass** die weitere Platte (10') aus einem gleichen Werkstoff wie die erste Plattte (10') besteht.

## Claims

1. A method for improving the heat insulation properties of closed-celled foamed plastics panels (10), which have a front surface (11) and a rear surface (12) which is located opposite the front surface (11) and a first thickness (D₁) which is delimited by the front and rear surfaces (11, 12), **characterised by** the steps:
a) heating of the panel (10) to a temperature of 30°C to 95°C,
b) pressing of the panel (10) after and/or upon heating by conveying it through a press roller train (13), with a press nip (D₃) formed in the press roller train being 1/2 to 1/20 of the first thickness (D₁), and
c) air-diffusion-tight coating of the panel (10) immediately after the pressing operation.

2. A method according to Claim 1, wherein the press roller train (13) has at least two pairs of rollers, **characterised in that** the speeds of transport (Gₙ) of the pairs of rollers (20, 21) along the press roller train (13) increase in steps in the direction of transport (X) of the panel (10).

3. A method according to Claim 1 or 2, **characterised in that** before the pressing:
a) milling-off of the uppermost outer surface on sides of the front surface (11) and/or the rear surface (12);
b) grinding-off of the uppermost outer surface on sides of the front surface (11) and/or the rear surface (12);
c) sawing-off of the uppermost outer surface on sides of the front surface (11) and/or the rear surface (12) and/or
d) perforation with needle rollers on sides of the the front surface (11) and/or of the rear surface (12) takes place.

4. A method according to one of the preceding claims, **characterised in that** the supplied panels (10) are heated to 65°C to 75°C before the pressing and/or during the pressing.

5. A method according to one of the preceding claims, **characterised in that** the blowing agents from the panels (10) which are pressed out upon pressing are collected and re-used.

6. A method according to one of the preceding claims, **characterised in that** it is carried out immediately after a production line (3) for the production of foamed plastics panels (10) as a continuous production line for the production of the panel (10').

7. A foamed plastics panel (10'), in particular produced according to a method according to one of the preceding claims, from a closed-celled plastics foam with a front surface (11) and a rear surface (12) which is located opposite the front surface (11) and a first thickness (D₁) delimited by the front and rear surface (11, 12), **characterised in that** the plastics foam after production is pressed and drawn and at least the front and the rear surfaces (11, 12) have a coating of air-diffusion-tight material (14).

8. A foamed plastics panel (10') according to Claim 7, **characterised in that** the plastics material for forming the foamed plastics panel (10) is polystyrene plastics material, which can be combined with other plastics materials, selected from the list comprising acrylonitriles, polymethylacrylates, rubber, polyethylene and/or additives, individually or in combination with one another, selected from the group comprising: carbon black, graphite, titanium dioxide, hexabromocyclododecane, triphenyl phosphate, talcum, calcium carbonate, kaolin, calcium stearate, magnesium oxide, which may also be present in micro form or nano form.

9. A foamed plastics panel (10') according to Claims 7 or 8, **characterised in that** the air-diffusion-tight coating material (14) is selected from the list comprising epoxides, polyurethanes, polyvinyl alcohol, polyester, latex, metallised coatings, aluminium foils and thicker polystyrene skin.

10. A foamed plastics panel (10') according to Claims 7 or 8, **characterised in that** is suitable as a blowing agent for the production of the original foamed panel (10), selected from the list comprising inorganic blowing agents, in particular carbon dioxides, nitrogen, organic blowing agents, in particular n--butane, isobutane, difluoroethane, chemical blowing agents, in particular p-toluene.

11. A closed-celled foamed plastics panel (10') according to one of Claims 7 to 10, **characterised in that** the pressure in the cells is less than or equal to 500 millibars.

12. A closed-celled foamed plastics panel (10') according to one of Claims 7 to 11, **characterised in that** the panel (10') is connected indissolubly to a further panel (10').

13. A closed-celled foamed plastics panel (10') according to Claim 12, **characterised in that** the further panel (10') consists of an identical material to the first panel (10').

## Revendications

1. Procédé pour améliorer les propriétés calorifuges de plaques de mousse synthétique à cellules fermées (10), lesquelles comportent une face avant (11) et une face arrière (12) à l'opposé de la face avant (11) et une première épaisseur (D₁) délimitée par les faces avant et arrière (11, 12), **caractérisé par** les étapes suivantes :
a) chauffage de la plaque (10) à une température comprise entre 30°C et 95°C,
b) compression de la plaque (10) après et/ou pendant le chauffage en la faisant avancer dans un train de cylindres de compression (13), un espacement entre les cylindres (D₃) formé dans ledit train de cylindres de compression s'élevant entre 1/2 et 1/20 de la première épaisseur (D₁), et
c) dépôt sur la plaque (10) d'un revêtement étanche à la diffusion d'air immédiatement après l'opération de compression.

2. Procédé selon la revendication 1 dans lequel le train de cylindres de compression (13) comporte au moins deux couples de cylindres, **caractérisé en ce que** les vitesses de transport (Gₙ) des couples de cylindres (20, 21) augmentent progressivement le long du train de cylindres de compression (13) dans le sens de transport (X) de la plaque (10).

3. Procédé selon la revendication 1 ou la revendication 2, **caractérisé en ce que**, avant la compression, on procède à
a) un fraisage de la face extérieure supérieure du côté de la face avant (11) et/ou de la face arrière (12) ;
b) un ponçage de la face extérieure supérieure du côté de la face avant (11) et/ou de la face arrière (12) ;
c) un sciage de la face extérieure supérieure du côté de la face avant (11) et/ou de la face arrière (12) et/ou
d) une perforation avec des rouleaux à aiguilles du côté de la face avant (11) et/ou de la face arrière (12).

4. Procédé selon l'une des revendications précédentes, **caractérisé en ce que** les plaques transportées sont chauffées à des températures comprises entre 65°C et 75°C avant la compression et/ou pendant la compression.

5. Procédé selon l'une des revendications précédentes, **caractérisé en ce que** les agents gonflants expulsés hors des plaques (10) lors de la compression sont récupérés et réutilisés.

6. Procédé selon l'une des revendications précédentes, **caractérisé en ce qu'**il est réalisé sous forme d'une ligne de production continue pour la fabrication de la plaque (10') immédiatement après une ligne de production (3) destinée à la fabrication de plaques de mousse synthétique (10).

7. Plaque de mousse synthétique (10'), en particulier fabriquée par un procédé selon l'une des revendications précédentes, réalisée à partir d'une mousse synthétique à cellules fermées, comportant une face avant (11) et une face arrière (12) à l'opposé de la face avant (11) et ayant une première épaisseur (D₁) délimitée par les faces avant et arrière (11, 12), **caractérisée en ce que** la mousse synthétique est comprimée et étirée après sa fabrication et **en ce qu'**au moins les faces avant et arrière (11, 12) sont dotées d'un revêtement en matériau étanche à la diffusion d'air (14).

8. Plaque de mousse synthétique (10') selon la revendication 7, **caractérisée en ce que** la matière synthétique utilisée pour la formation de la plaque de mousse synthétique (10) est du polystyrène pouvant être combiné avec d'autres matières synthétiques choisies dans la liste comprenant les acrylonitriles, les poly(acrylate de méthyle), le caoutchouc, des polyéthylènes et/ou des additifs, seules ou en combinaison entre elles, additifs choisis dans le groupe comprenant la suie, le graphite, le dioxyde de titane, l'hexabromocyclododécane, le phosphate de triphényle, le talc, le carbonate de calcium, le kaolin, le stéarate de calcium, l'oxyde de magnésium, lesquels peuvent se présenter également sous forme microscopique ou nanoscopique.

9. Plaque de mousse synthétique (10') selon les revendications 7 ou 8, **caractérisée en ce que** le matériau de revêtement (14) étanche à la diffusion d'air est choisi dans la liste comprenant des époxydes, des polyuréthanes, l'alcool polyvinylique, le polyester, le latex, des revêtements métallisés, des films d'aluminium, la peau de polystyrène assez épaisse.

10. Plaque de mousse synthétique (10') selon les revendications 7 ou 8, **caractérisée en ce que** l'agent gonflant utilisé pour la fabrication de la plaque de mousse initiale (10) est choisi dans la liste comprenant des agents gonflants minéraux, en particulier les dioxydes de carbone, l'azote, des agents gonflants organiques, en particulier le n-butane, l'isobutane, le difluoroéthane, des agents gonflants chimiques, en particulier les p-toluènes.

11. Plaque de mousse synthétique à cellules fermées (10') selon l'une des revendications 7 à 10, **caractérisée en ce que** la pression dans les cellules est inférieure ou égale à 500 millibars.

12. Plaque de mousse synthétique à cellules fermées (10') selon l'une des revendications 7 à 11, **caractérisée en ce que** la plaque (10') est reliée de manière indétachable à une autre plaque (10').

13. Plaque de mousse synthétique à cellules fermées (10') selon la revendication 12, **caractérisée en ce que** l'autre plaque (10') est constituée du même matériau que la première plaque (10').
